# EUROPEAN PATENT SPECIFICATION

(11) **EP 4 409 349 B1**
(45) Date of publication and mention of the grant of the patent: **24.06.2026**
(21) Application number: 21787044.3
(22) Date of filing: 28.09.2021
(51) Int. Cl.: G02B 26/08, G02B 30/10

(54) **LIGHT-FIELD PROJECTOR GENERATING OPTICALLY CORRECTED VIRTUAL IMAGES AND METHOD OF GENERATING CORRECTED VIRTUAL IMAGES BY USING THE LIGHT FIELD PROJECTOR**
LICHTFELDPROJEKTOR DER OPTISCH KORRIGIERTE VIRTUELLE BILDER ERZEUGT UND VERFAHREN ZUR ERZEUGUNG KORRIGIERTER VIRTUELLER BILDER UNTER VERWENDUNG DES LICHTFELDPROJEKTORS
PROJECTEUR DE CHAMP LUMINEUX GÉNÉRANT DES IMAGES VIRTUELLES CORRIGÉES OPTIQUEMENT ET PROCÉDÉ DE GÉNÉRATION D'IMAGES VIRTUELLES CORRIGÉES À L'AIDE DU PROJECTEUR DE CHAMP LUMINEUX

(43) Date of publication of application: 07.08.2024
(73) Proprietor: CREAL SA, 1024 Ecublens VD (CH)
(72) Inventor: SMOLIK, Grégoire, 1022 Chavannes-près-Renens (CH); HIRT, Grégoire, 1024 Ecublens (CH)
(74) Representative: P&TS SA (AG, Ltd.)
(86) International application number: PCT/IB2021/058833
(87) International publication number: WO 2023/052809

(56) References cited:
- WO-A1-2021/038430
- WO-A1-2021/122640
- US-A1- 2021 231 973
- ANDREW MAIMONE ET AL: "High Efficiency Near-Eye Light Field Display", ACM TRANS. GRAPH. ARTICLE, 17 March 2015 (2015-03-17), XP055433366, Retrieved from the Internet <URL:https://cs.unc.edu/~maimone/media/Maimone_GTC2015.pdf> [retrieved on 20171208]

## Description

### Technical domain

The present disclosure concerns a light-field projector for projecting an image. More particularly, the present disclosure concerns a light-field projector for generating optically corrected virtual images. The present disclosure concerns a method for generating corrected virtual images by using the light field projector.

### Related art

The basic principles and concept of ophthalmic testing devices have not changed since their inception often more than 100 years ago. ophthalmic testing devices use refractive lenses and curved mirrors to perform optical corrections. For instance, the so-called phoropter is based on a set of refractive optical elements with different correction characteristics that present to the patient's eye an optically transformed image of a test pattern with the goal to subjectively determine the patient's refractive error and eyeglass prescription. Such devices are bulky, costly, difficult to manufacture, provide a limited set of corrections and often require several meters of free space between the device and a fixed test pattern.

Document US2016042501 discloses a system for compensating for at least one optical aberration in a vision system of a viewer viewing a display. The display comprises an array of pixels and a microlens array. Image data for an image to be displayed is received, at least one parameter related to at least one optical aberration in the vision system of a viewer is received and an aberration compensated image to be displayed is computed based on the at least one received parameter related to the vision system of a viewer and on at least one characteristic of the light field element. The aberration compensated image is displayed on the display medium, such that when a viewer whose vision system has the at least one optical aberration views the aberration compensated image displayed on the display medium through a light field element, the aberration compensated image appears to the viewer with the at least one aberration reduced or eliminated.

Document WO2021122640 discloses a system for determining refraction features of both first and second eyes of a subject. The system comprises a light field display device including a parallax barrier mask or microlens array layered on an array of pixels, and a system of localisation of the positions of the first and second eyes of the subject. The light field display device is configured to generate a first light field directed selectively toward the first eye, and, respectively, a second light field directed selectively toward the second eye. A control unit is adapted to adjust said first light field as a function of at least a first refraction parameter associated with at least a first optical aberration for said first eye and the control unit being adapted to adjust said second light field as a function of at least a second refraction parameter associated with at least a second optical aberration for the second eye.

In the above solutions, the resolution is determined by the number of microlenses or by the pitch of the parallax barrier mask. Therefore, the above solutions are able to display simple shapes (dots, lines) but do not allow for displaying more complex 3d scenes or images. The reduced number of pixels also reduces the range of available optical corrections and only allows for varying the optical corrections in a discrete manner.

### Summary

The present disclosure concerns a light-field projector for generating optically corrected virtual images, comprising: a spatial light modulator (SLM) and a light source including a plurality of point light, each point light being configured to emit an incident light field illuminating the SLM. The SLM is configured to display a reference SLM image pattern in an SLM plane, the reference SLM image pattern being configured to modulate the incident light field and generate a modulated light field in accordance with the SLM image pattern. A projection optic is configured to project the modulated light field along a reference optical axis such as to project a virtual image along the reference optical axis. The SLM is further configured to display a corrected SLM image pattern, wherein the corrected SLM image pattern corresponds to the reference SLM image pattern being shifted in the SLM plane, and wherein the corrected SLM image pattern is configured such that the projection optic projects the virtual image along an apparent projection axis that differs from the reference optical axis, such that the virtual image simulates at least an optical correction.

In one aspect, the corrected SLM image pattern corresponds to the reference SLM image pattern further comprising a geometrical distortion.

The present disclosure concerns a method for generating corrected virtual images by using the light field projector, the method comprising:
computing at least one virtual image by using a virtual pinhole camera model imaging a virtual 3D scene and displaying a reference SLM image pattern in accordance with the computed virtual image;
generating at least one optical correction parameter;
modifying the reference SLM image pattern as a function of said at least one optical correction parameter to obtain a corrected SLM image pattern;
sequentially illuminating the SLM by the incident light fields such as to generate at least one modulated light field configured to form said at least one virtual image; and
sequentially projecting said at least one modulated light field to project said at least one virtual image simulating said at least one optical correction.

The light-field projector disclosed herein can be used as a digital ophthalmic device. More specifically, the light-field projector can replace existing devices traditionally referred to as phoropters or refractors or similar devices that use refractive or diffractive elements to produce required optical transformations and inputs to the patient's eyes.

The digital image transformation of the light-field projector can simulate a practically continuous spectrum of optical corrections that should be otherwise performed with refractive lenses. The light-field projector can simulate a plurality of optical corrections to a single image.

The light-field projector does not require costly precision optical elements and can be smaller than conventional ophthalmic devices, yet it provides a wider and finer range and higher versatility of optical corrections.

In contrast to the known solutions, the light-field projector allows using the full resolution of the SLM such that it can display complex 3d scenes or images and allow for a wider range of available optical corrections and for varying the optical corrections in a continuous manner.

The light-field projector can be used as a display in 3D visualisation systems, such as Virtual or Augmented Reality headsets or smart glasses, where it can perform automated ophthalmic testing and/or correction, thus eliminating the need for prescription inserts or mechanical adjustments.

### Short description of the drawings

Exemplar embodiments of the invention are disclosed in the description and illustrated by the drawings in which:
Fig. 1 is a representation of a light-field projector in a two-dimensional plane;
Fig. 2 shows a simplified version of the light field projector of Fig. 1;
Fig. 3a shows a representation of a virtual pinhole camera;
Fig. 3b shows a two-dimensional representation of the pinhole camera of Fig. 3a;
Fig. 4 shows a two-dimensional representation of the light field projector in the absence of optical correction;
Fig. 5 shows a two-dimensional representation of the light field projector with virtual pinhole cameras configured to simulate a negative refractive correction, according to an embodiment;
Fig. 6a shows the light field projector in the absence of correction;
Fig. 6b shows the light field projector producing a negative refractive correction, according to an embodiment;
Fig. 7 shows a two-dimensional representation of the light field projector with virtual pinhole cameras configured to simulate a positive refractive correction, according to an embodiment;
Fig. 8 shows a two-dimensional representation of the light field projector with virtual pinhole cameras configured to simulate a prismatic refraction correction, according to an embodiment;
Fig. 9 shows a three-dimensional representation of the light field projector with virtual pinhole cameras, according to an embodiment;
Fig. 10 shows a three-dimensional representation of the light field projector with virtual pinhole cameras configured to simulate a cylindrical correction, according to an embodiment;
Figs. 11a-11e represent corrected SLM image patterns in the SLM plane corresponding to no correction (Fig. 11a), negative refractive correction (Fig. 11b), positive refractive correction (Fig. 11c), cylindrical correction (Fig. 11d), and prismatic refraction correction (Fig. 11e);
Fig. 12 illustrates a virtual image comprising a plurality of virtual objects, according to an embodiment;
Fig. 13 illustrates a virtual image comprising two virtual objects, each being displayed with a different correction;
Fig. 14 illustrates a method for generating corrected virtual images by using the light field projector, according to an embodiment;
Fig. 15 illustrates the method, according to a variant; and
Fig. 16 illustrates the method, according to another variant.

### Examples of embodiments

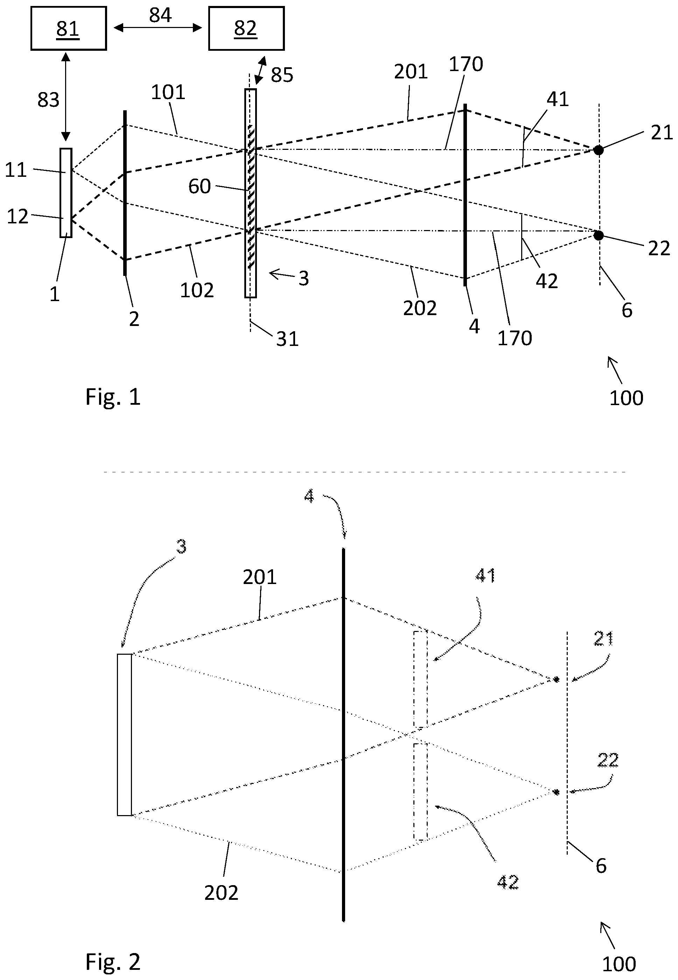

**Fig. 1** is a representation of a light-field projector 100 in a two-dimensional plane. The light-field projector 100 comprises a light device 1 provided with a plurality of light sources (two point light sources 11 and 12 are shown in Fig. 1). The point light sources 11, 12 can be sequentially illuminated such as to sequentially emit a plurality of incident light fields 101,102. The incident light fields 101,102 are collimated with collimating optics 2 before sequentially illuminating a spatial light modulator (SLM) 3 under a different set of incident angles. The SLM 3 is configured to provide a reference SLM image pattern 60 in an SLM plane 31. The reference SLM image pattern 60 modulates each of the incident light field 101, 102, such as to generate modulated light fields 201, 202, in accordance with the reference SLM image pattern 60. Each modulated light field 201, 202 is modulated by the reference SLM image pattern 60 of the SLM 3 and carries out a corresponding image information. The light-field projector 100 can further comprise a projection optic 4 configured to project the modulated light fields 201, 202 along a reference projection axis 170. The projected modulated light fields 201, 202 sequentially form a plurality of virtual viewpoints 21, 22. The virtual viewpoints 21, 22 lie within an eye box 6, allowing a user to see an authentic 3D rendering of a digital scene.

The light device 1 can comprise an array of spatially disparate point light-sources 11, 12 to illuminate the SLM 3, each point light-source 11, 12 having a different orientation of a wave vector, in order to form the virtual viewpoints 21, 22.

**Fig. 2** shows a simplified version of the light field projector 100 with the SLM 3 and the projection optic 4 of Fig. 1. Using the sequentially emitted plurality of incident light fields 101,102, the projected modulated light-beams 201, 202 form virtual viewpoints 21, 22 and virtual images 41, 42, each virtual image 41, 42 reproducing the reference SLM image pattern 60 from the SLM 3.

Each virtual viewpoint 21, 22 can be represented as a virtual pinhole camera where the virtual image 41 of a 3D scene is projected on an image plane. The virtual images 41, 42 can then be computed by using the virtual pinhole cameras imaging a virtual 3D scene.

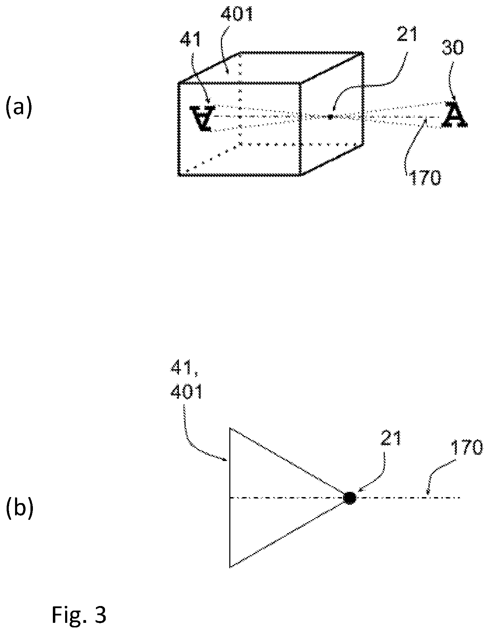

**Fig. 3a** shows a representation of a virtual pinhole camera where an image 41 of a 3D scene 30 is projected on a virtual image plane 401 through a pinhole 21, along the reference projection axis 170. **Fig. 3b** shows a two-dimensional representation of the pinhole camera of Fig. 3a.

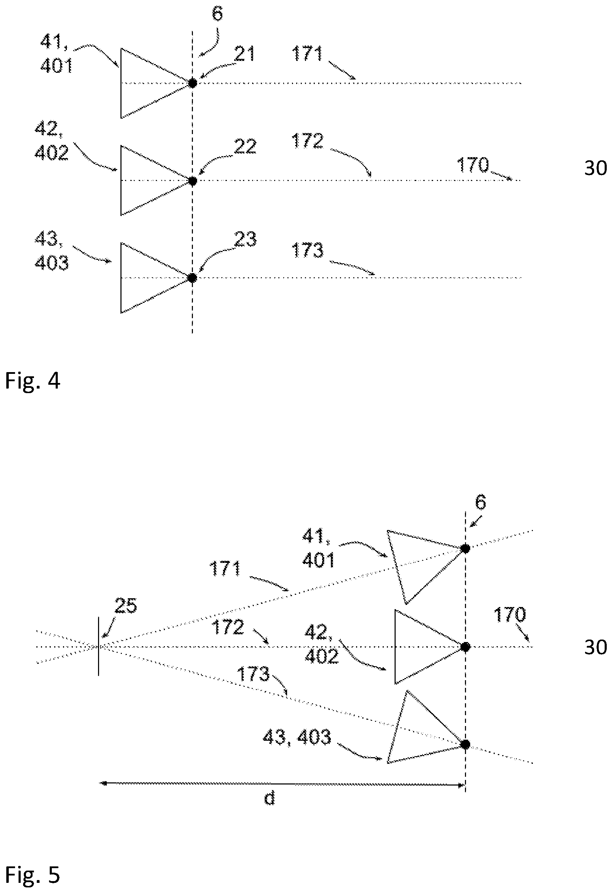

**Fig. 4** shows a two-dimensional representation of the light field projector 100, where an array of virtual pinhole cameras 21, 22, 23 are located in the plane of the eye box 6 (three virtual pinhole camera are shown). For each virtual pinhole camera 21-23, a virtual image 41-43 is respectively formed on the virtual image plane 401-403 of the virtual pinhole camera 21-23 and is projected along an apparent projection axis 171, 172, 173. Each virtual pinhole camera 21-23 (or each image 21-23) is respectively formed by a sequentially projected modulated light field (such as the modulated light fields 201, 202 shown in Figs 1 and 2). In the example of Fig. 4, the apparent projection axes 171, 172, 173 of the respective virtual images image 41-43 are parallel to each other and to the reference projection axes 170. This configuration corresponds to no optical correction, or to no optometric error (emmetropia).

Figs. 5-8 show a representation of the light field projector 100 using virtual pinhole cameras with virtual image planes, according to an embodiment, where the virtual pinhole cameras are configured such as to simulate an optical transformation corresponding to an optometric error.

More particularly, **Fig. 5** shows the light field projector 100 where the virtual pinhole cameras 21, 22, 23 are configured such as to simulate negative refractive correction (myopia). Here, the virtual pinhole cameras 21-23 (and their respective virtual image planes 401-403) are oriented relative to the reference projection axis 170 such that their respective apparent projection axes 171-173 diverge relative to the reference projection axis 170, towards the 3D scene 30. In this configuration, the apparent projection axes 171, 172, 173 of the virtual pinhole cameras 21, 22, 23 converge on the same virtual focal point 25 on the reference projection axis 170, at a distance d from the virtual eye box 6. The value of the correction in dioptres is equal to 1/d, where d is the distance between the virtual focal point 25 and the virtual eye box 6. Here, the distance d is a negative distance. In other words, the virtual focal point 25 is located on the same side of the SLM 3, between the image of the SLM 3 and the virtual eye box 6.

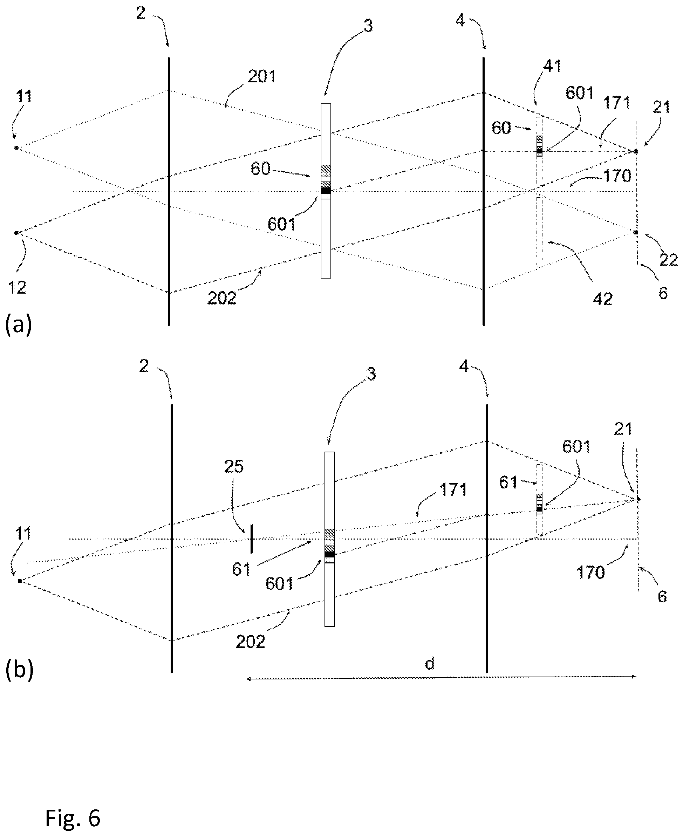

**Figs. 6a** and **6b** illustrate light field projector 100 configured to apply the negative refractive correction. More particularly, the negative refractive correction is obtained by displaying a corrected SLM image pattern 61 on the SLM 3. In the present example, the reference SLM image pattern 60 and the corrected SLM image pattern 61 on the SLM 3 comprises a plurality of image components 601 (six image components are shown for illustrative purposes).

Fig. 6a shows the light field projector 100 in the absence of correction. Two virtual viewpoints 21, 22 (virtual pinhole cameras) are represented, through each of which a virtual image 41, 42 is visible sequentially. Each virtual image 41, 42 comprises the reference SLM image pattern 60, although the reference SLM image pattern 60 is only shown in virtual image 41. The image 60 might not be exactly the same for the virtual images 41 and 42, depending on the 3d scene. It is only the same image if the 3D scene is a flat scene at infinity. The reference SLM image pattern 60 is displayed on a first area of the SLM 3 where one of the image components 601 (represented in black) is aligned with the reference projection axis 170. Viewed from the virtual viewpoint 21, the image component 601 appears as if it was focused at infinity, since image component 601 is projected along an apparent projection axis 171 that is parallel to the reference projection axis 170.

In Fig. 6b, the corrected SLM image pattern 61 corresponds to the reference SLM image pattern 60 that is displayed on a second area of the SLM 3 that is shifted relative to the first area, where one of the image components 601 (represented in black) is no more aligned with the reference projection axis 170 but shifted relative to it (below the reference projection axis 170 in the example of Fig. 6b). Viewed from the virtual viewpoint 21, the image component 601 appears as if it was focused at a finite distance d at virtual focal point 25, since image component 601 is projected along an apparent projection axis 171 that converges towards the reference projection axis 170, at the negative distance d. In other words, the corrected SLM image pattern 61 provides the negative refractive correction.

The light field projector 100 can comprise a SLM control unit 82 (see Fig. 1) configured to control an SLM signal 85 which creates the SLM reference image pattern 60 and corrected SLM image pattern 61 on the SLM 3. The light field projector 100 can further comprise an illumination control unit 81 configured to control an illumination signal 83 which powers specific point light sources 11 and 12 of the light device 1 in a specific time dependent fashion. The SLM control unit 82 can be synchronized with the illumination control unit 81 via a synchronization communication signal 84.

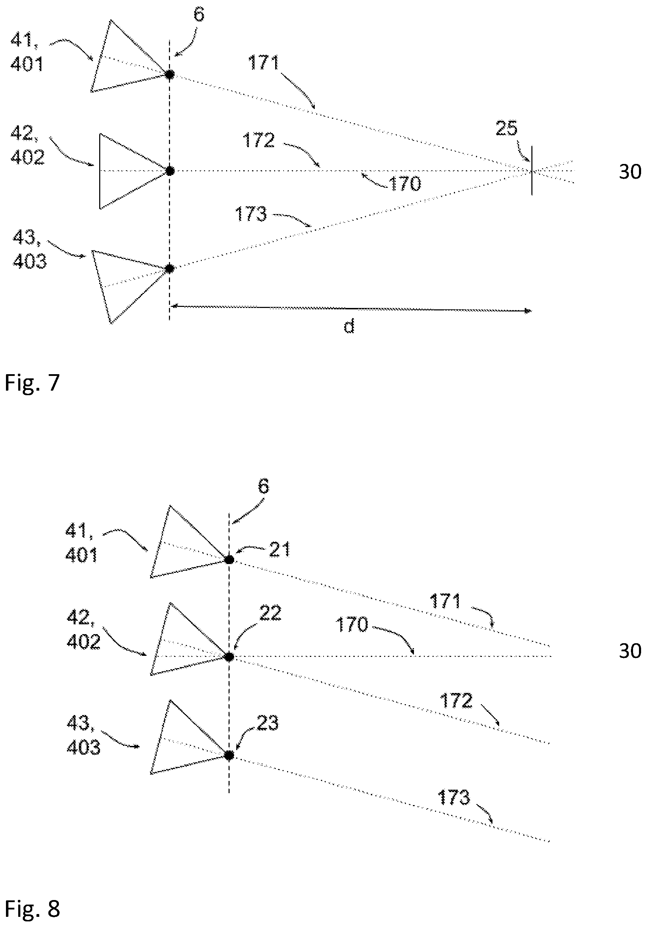

**Fig. 7** shows the virtual pinhole cameras 21-23 and their respective virtual image planes 401-403 that are arranged such as to simulate a positive refractive correction (hyperopia). Here, the corrected SLM image pattern 61 is configured to correspond to the virtual pinhole cameras 21-23 being rotated such that their respective apparent projection axes 171-173 converge towards the reference projection axis 170. In this configuration, the apparent projection axes 171-173 of the virtual pinhole cameras 21-23 converge on the same virtual focal point 25 towards the 3D scene 30. The virtual focal point 25 is located on the reference projection axis 170, at a distance d from the virtual eye box 6. The value of the correction in dioptres is equal to 1/d, where d is the distance between the virtual focal point 25 and the virtual eye box 6. Here, the distance d is a positive distance. In other words, the virtual focal point 25 is located away from the virtual eye box 6, on the opposite side of the SLM 3.

**Fig. 8** shows the implementation of a prismatic refraction correction. A prismatic refraction correction is used in eyeglasses for correcting diplopia, or double vision. The prismatic refraction correction helps align two images, so that only one image is seen. Here, the corrected image pattern 61 is configured to correspond to the virtual pinhole cameras 21-23, and their corresponding virtual image planes 401-403 being oriented relative to the reference projection axis 170 such that their respective apparent projection axes 171-173 are parallel to each other and tilted relative to the reference projection axis 170. The virtual focal point is thus located at infinity.

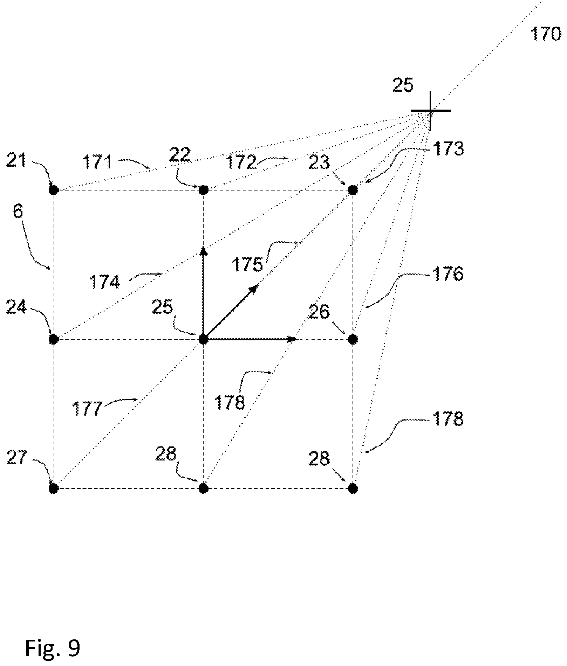

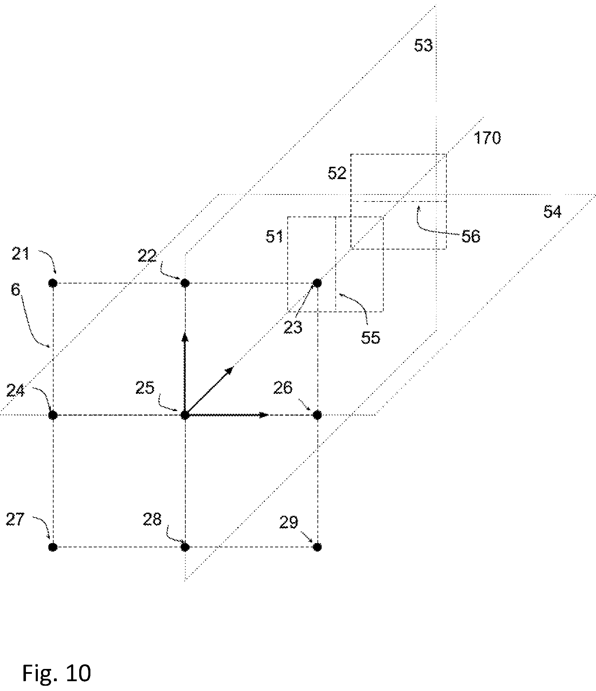

Although nine virtual pinhole cameras 21-29 are shown in Figs. 9 and 10, the light field projector 100 can comprise any number of virtual pinhole cameras.

**Fig. 9** shows a three-dimensional generalization of the two-dimensional schematic representation of the pinhole camera array of the light field projector 100 in the configuration of Fig. 7. Nine virtual pinhole cameras 21-29 are shown lying in the plane of the eye box 6, with their corresponding apparent projection axes 171-179. Here, the apparent projection axes 171-179 converge towards the reference projection axis 170 at virtual focal point 25, at a positive distance d. The light field projector 100 is thus arranged to simulate a positive refractive correction.

**Fig. 10** shows cylindrical corrections simulated by the pinhole camera array of Fig. 9. Here, the corrected SLM image pattern 61 is obtained by projecting the reference pattern 60 on the tilted pinhole camera plane. For small angles, this is roughly equivalent to a simple x-y shift in the SLM plane 31, but for larger angles there is also a "reprojection" on the plane perpendicular to the optical axis. This results in a slight shrinkage/enlargement of parts of the image, as explained in more detail below.

More particularly, the corrected SLM image pattern 61 can be configured to rotate the apparent main projection axis 171-179 along two orthogonal rotation axes with different virtual focal planes 51, 52, such that the virtual image 41-44 simulates a cylindrical correction. The cylindrical correction is applied by aiming the pinhole camera array at both axes and at the same time. In the example of Fig. 10, a first rotation axis 55 is parallel and coincident to a first rotation plane 53 and a second rotation axis 56 is parallel to a second rotation plane 54. The first rotation plane 53 is orthogonal to the second rotation plane 54. When the pinhole camera array is rotated around an axis parallel to the second rotation plane 54, the virtual focal point is in a first focal plane 51 that is closer to the virtual pinhole cameras 21-29 than a second focal plane 52 when the pinhole camera array is rotated in the second rotation plane 54 (i.e., when the reference SLM image pattern 60 is rotated in the second rotation plane 54). The first rotation axis 55 corresponds to the intersection of the first focal plane 51 and the first rotation plane 53. The second rotation axis 56 corresponds to the intersection of the second focal plane 52 and the second rotation plane 54. Locating the virtual focal point in the first and second focal planes 51, 52 can be achieved by shifting the reference SLM image pattern 60 in the SLM plane 31, in addition to its rotation. The degree of shifting can differ to obtain the different first and second focal planes 51, 52. More generally, the corrected SLM image pattern 61 can be obtained by rotating the first and second rotation planes 53 and 54 around an axis z substantially orthogonal to the SLM plane 31. The corrected SLM image pattern 61 is then configured to rotate the apparent main projection axis 171-179 around the first and second rotation axes 55 and 56 that are also rotated along this axis z.

Although nine virtual pinhole cameras 21-29 are shown in Figs. 9 and 10, the light field projector 100 can comprise any number of virtual pinhole cameras.

The cylindrical corrections of Fig. 10 can correspond to astigmatism correction, where the first and second rotation plane 53, 54 correspond to tangential and sagittal meridians and simulate correction lens that has different radii of curvature in different planes (a cylindrical lens).

In addition to corrections described above, the light field projector 100 can be used to simulate arbitrary and more complex corrections by setting the pinhole camera directions independently.

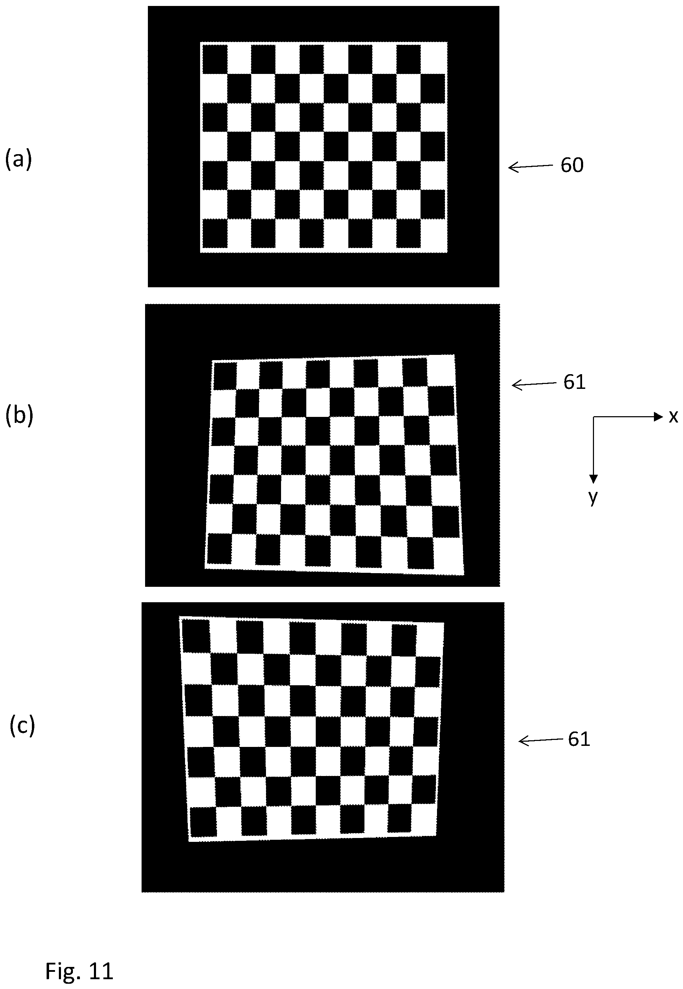

As illustrated in Figs. 11a-11e, the optical corrections are obtained by distorting geometrically the reference SLM image pattern 6 in the SLM plane 31.

Fig. 11a shows an exemplary reference SLM image pattern 60 in absence of distortion and optical correction. Here, the reference SLM image pattern 60 is a checkerboard pattern.

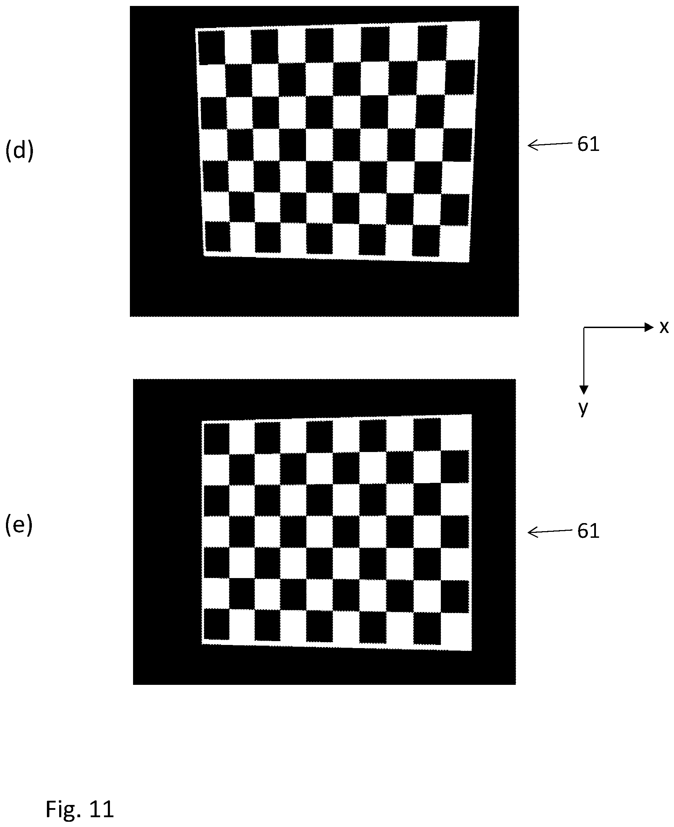

Fig. 11b shows the corrected SLM image pattern 61 adapted to simulate a negative refractive correction, Fig. 11c shows the corrected SLM image pattern 61 adapted to simulate a positive refractive correction and Fig. 11d shows the corrected SLM image pattern 61 adapted to simulate a cylindrical correction. The corrected SLM image pattern 61 corresponds to the checkerboard pattern being shifted in the SLM plane 31 (along two orthogonal directions x, y in the SLM plane 31) and comprising a non-uniform vertical shear distortion. The shift and distortion are obtained by reprojecting the reference SLM image pattern 60 on a tilted virtual image plane 401-403. For small tilt angles of the reprojected reference SLM image pattern 60, the corrected SLM image pattern 61 corresponds to the checkerboard pattern being simply shifted in the SLM plane 31.

Fig. 11e shows the corrected SLM image pattern 61 adapted to simulate a prismatic refractive correction. The corrected SLM image pattern 61 corresponds to the checkerboard pattern being shifted in the SLM plane 31 (here along direction x in the SLM plane 31) and comprising a uniform perspective distortion according to a plane, here along the horizontal plane.

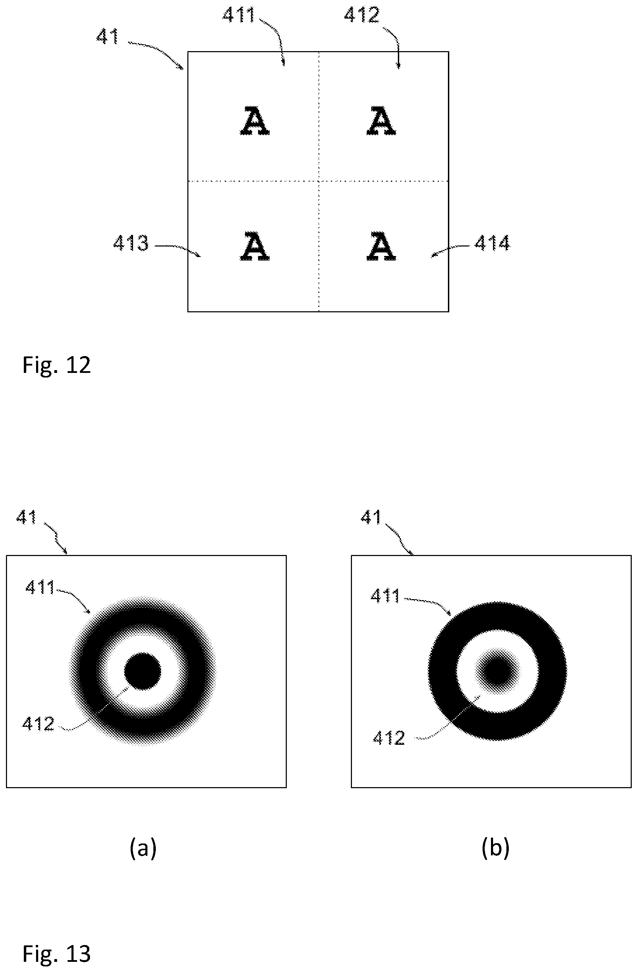

In one aspect, the light field projector 100 can be configured to display a virtual image containing an arbitrary number of different corrections simultaneously. In other words, each virtual image 41, 42 can simulate a plurality of optical corrections. **Fig. 12** illustrates such a virtual image 41. In this case, the projected modulated light field 201, 202 can generate a virtual image 41 comprising a plurality of sub-areas, or virtual objects for example four virtual images denoted by numerals 411, 412, 413, 414 in Fig. 12. Each virtual object 411, 412, 413, 414 can display a distinct object having a given optical correction. Thus, the virtual image 41 can comprise multiple optical corrections.

Another example of a light field image is described in **Figs. 13a** and **13b** where the projected modulated light fields 201, 202 form a virtual image 41 comprising a ring 411 and a circle 412, each being displayed with a different correction. In Fig. 13a, the ring 411 appears blurred and the circle 412 appears sharp at the same time, depending on the accommodation of the viewer. Fig. 132b shows a correction resulting in the reverse situation.

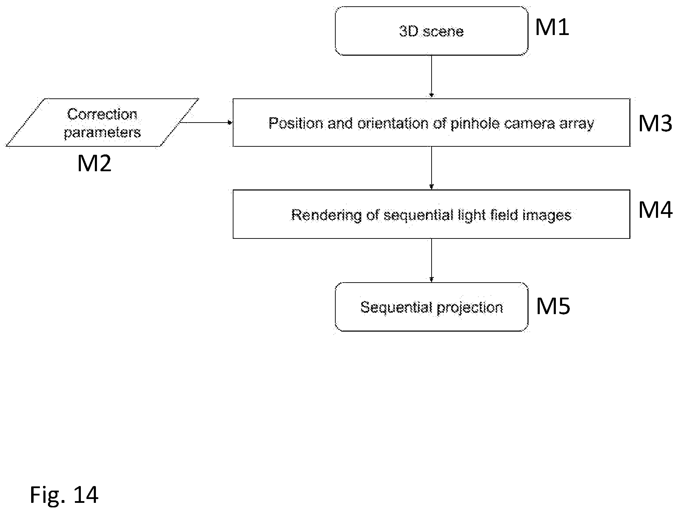

A method for generating corrected virtual images by using the light field projector 100 is shown in **Fig. 14****,** according to an embodiment. The method comprises the steps of:
computing at least one virtual image 41-44 by using a virtual pinhole camera model imaging a virtual 3D scene and displaying a reference SLM image pattern 60 in accordance with the computed virtual images (M1);
generating at least one optical correction parameter (M2);
shifting and/or rotating the reference SLM image pattern 60 as a function of said at least one optical correction parameter to obtain a corrected SLM image pattern 61 (M3);
sequentially illuminating the SLM 3 by the incident light fields 101,102 such as to generate at least one modulated light field 201, 202 configured to form said at least one virtual image 41-44 (M4); and
sequentially projecting said at least one modulated light field 201, 202 to project said at least one virtual image 41-44 simulating said at least one optical correction (M5).

The steps of computing at least one virtual image 41-44, generating at least one optical correction parameter, and shifting and/or rotating the reference SLM image pattern 60 can be performed in the SLM control unit 82. The step of sequentially illuminating the SLM 3 can be controlled by the illumination control unit 81 and can be synchronized with the SLM control unit 82 via the synchronization communication signal 84.

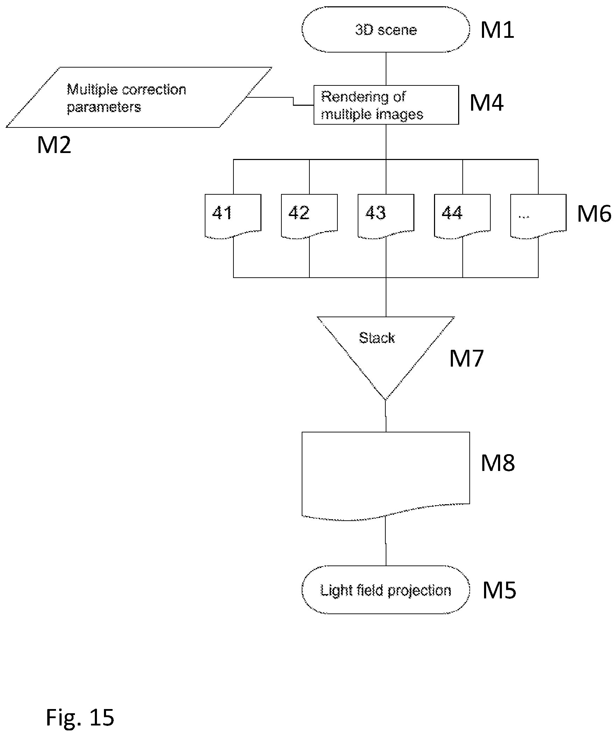

In one aspect represented in **Fig. 15****,** a plurality of modulated light fields 201, 202 are generated, each forming a virtual image 41-44 (M6). The virtual images 41-44 are formed separately where each virtual image 41-44 can simulate a distinct optical correction. The method can further comprise a step of sequentially stacking the plurality of virtual images 41-44 (M7) and a step of merging the virtual images 41-44 (M8). The merged virtual images 41, 42 are then projected (M5). The merged virtual images 41-44 can thus comprise a plurality of optical corrections.

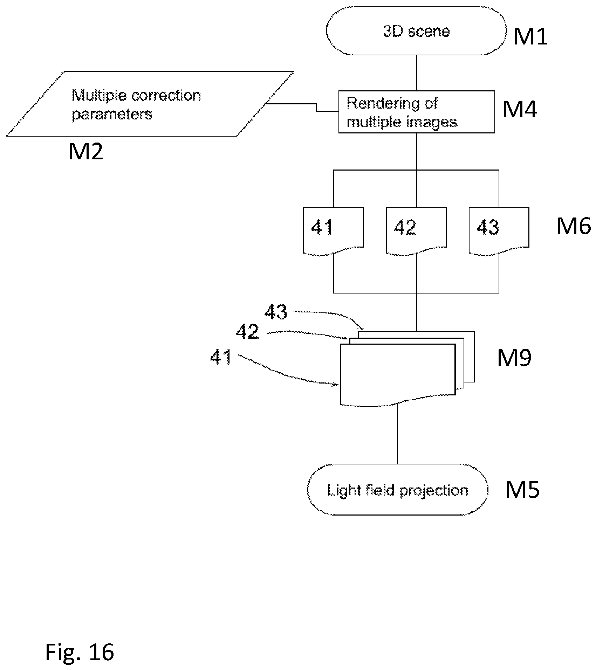

In another aspect represented in **Fig. 16****,** a plurality of modulated light fields 201, 202 are generated, each forming a virtual image 41-44 (M6). The virtual images 41-44 are formed separately (M9) where each virtual image 41-44 can simulate a distinct optical correction. The method can further comprise a step of projecting the virtual images 41-44 sequentially (M5). The sequential projection can be sufficiently fast such that as to be perceived by a viewer as a single image simulating the plurality of optical corrections.

It is understood that the present invention is not limited to the exemplary embodiments described above and other examples of implementations are also possible within the scope of the patent claims.

For instance, the light field projector can also comprise a holographic display, where an optical phased array (OPA) provides the functionality of the SLM, wherein adjustable surface elements of the OPA are used to generate the reference image pattern 60 and corrected image pattern 61.

### Reference Numbers and Symbols

- 1: light device
- 11, 12: point light source
- 100: light-field projector
- 101, 102: incident light field
- 170: reference projection axis
- 171-179: apparent projection axis
- 2: collimating optics
- 21-29: virtual viewpoint, virtual pinhole camera
- 25: virtual viewpoint, virtual focal point
- 201, 202: modulated light field
- 3: spatial light modulator
- 30: 3D scene
- 31: SLM plane
- 4: projection optics
- 41-44: virtual image
- 401-403: virtual image plane
- 411-414: virtual object
- 51: first focal plane
- 52: second focal plane
- 53: first plane
- 54: second plane
- 55: first rotation axis
- 56: second rotation axis
- 6: eye box
- 60: reference SLM image pattern
- 61: corrected SLM image pattern
- 601: image component
- 81: illumination control unit
- 82: SLM control unit
- 83: illumination signal
- 84: synchronization communication signal
- 85: SLM signal
- d: distance

## Claims

1. Light-field projector (100) for generating optically corrected virtual images, comprising:
a spatial light modulator, SLM (3);
a light source (1) including a plurality of point light (11, 12), each point light (11, 12) being configured to emit an incident light field (101,102) illuminating the SLM (3);
the SLM (3) being configured to display a reference SLM image pattern (60) in an SLM plane (31), the reference SLM image pattern (60) being configured to modulate the incident light field (101,102) and generate a modulated light field (201, 202) in accordance with the SLM image pattern (60); and
a projection optic (4) configured to project the modulated light field (201, 202) along a reference optical axis (170), and project a virtual image (41-44) along the reference optical axis (170);
**characterized in that**
the SLM (3) is further configured to display a corrected SLM image pattern (61);
wherein the corrected SLM image pattern (61) corresponds to the reference SLM image pattern (60) being shifted in the SLM plane (31); and
wherein the corrected SLM image pattern (61) is configured such that the projection optic (4) projects the virtual image (41-44) along an apparent projection axis (171-179) that differs from the reference optical axis (170), such that the virtual image (41-44) simulates at least an optical correction.

2. The light-field projector according to claim 1,
wherein the corrected SLM image pattern (61) corresponds to the reference SLM image pattern (60) further comprising a geometrical distortion.

3. The light-field projector according to claim 2,
wherein the geometrical distortion comprises a non-uniform vertical shear distortion, such as to simulate a negative or positive refractive correction, or a cylindrical correction.

4. The light-field projector according to any one of claims 1 to 3, wherein the corrected SLM image pattern (61) is configured to make the apparent projection axis (171-179) converge on a virtual focal point (25) on the reference optical axis (170), between the SLM (3) and the virtual eye box (6), such that the virtual image (41-44) simulates a negative refractive correction.

5. The light-field projector according to any one of claims 1 to 3, wherein the corrected SLM image pattern (61) is configured to make the apparent projection axis (171-179) converge on a virtual focal point (25) on the reference optical axis (170) away from the virtual eye box (6) on the opposed side of the SLM (3), such that the virtual image (41-44) simulates a positive refractive correction.

6. The light-field projector according to claim 1 or 2,
wherein the corrected SLM image pattern (61) corresponds to the reference SLM image pattern (60) further comprising a geometrical distortion comprising a uniform perspective distortion according to a plane perpendicular to the SLM plane (31); and
wherein the corrected SLM image pattern (61) is configured to make the apparent projection axis (171-179) parallel to each other and tilted relative to the reference optical axis (170), such that the virtual image (41-44) simulates a prismatic refraction correction.

7. The light-field projector according to any one of claims 1 to 3, wherein the corrected SLM image pattern (61) is configured to rotate the apparent projection axis (171-179) around an axis (z) substantially orthogonal to the SLM plane (31).

8. The light-field projector according to any one of claims 1 to 3, wherein the corrected SLM image pattern (61) is configured to rotate the apparent projection axis (171-179) along two orthogonal rotation axes with different virtual focal planes (51, 52), such that the virtual image (41-44) simulates a cylindrical correction.

9. The light-field projector according to claim 8,
wherein the two orthogonal rotation axes are substantially parallel to, respectively, a first rotation plane (53) corresponding to a tangential meridian and a second rotation plane (54) corresponding to a sagittal meridian having different radii of curvature in different planes.

10. The light-field projector according to any one of claims 1 to 9, wherein each virtual image (41-44) comprises a plurality of optical corrections.

11. A method for generating corrected virtual images by using the light field projector (100) according to any one of claims 1 to 10, the method comprising:
computing at least one virtual image (41-44) by using a virtual pinhole camera model imaging a virtual 3D scene and displaying a reference SLM image pattern (60) in accordance with the computed virtual image;
generating at least one optical correction parameter;
modifying the reference SLM image pattern (60) as a function of said at least one optical correction parameter to obtain a corrected SLM image pattern (61);
sequentially illuminating the SLM (3) by the incident light fields (101,102) such as to generate at least one modulated light field (201, 202) configured to form said at least one virtual image (41-44); and
sequentially projecting said at least one modulated light field (201, 202) to project said at least one virtual image (41-44) simulating said at least one optical correction.

12. The method according to claim 11,
wherein the corrected SLM image pattern (61) corresponds to the reference SLM image pattern (60) further comprising a non-uniform vertical shear distortion or a uniform perspective distortion according to a plane perpendicular to the SLM plane (31).

13. The method according to claim 11 or 12,
comprising generating a plurality of modulated light fields (201, 202), each modulated light fields (201, 202) forming a virtual image (41-44);
wherein the virtual images (41-44) are formed separately, each virtual image (41-44) simulating a distinct optical correction.

14. The method according to claim 13,
further comprising sequentially stacking the plurality of virtual images (41-44); merging the virtual images (41-44); and projecting the merged virtual images (41, 42).

15. The method according to claim 13,
further comprising projecting the virtual images (41-44) sequentially.

## Patentansprüche

1. Lichtfeld-Projektor (100) zur Erzeugung optisch korrigierter virtueller Bilder, umfassend:
einen räumlichen Lichtmodulator SLM (3);
eine Lichtquelle (1), welche eine Vielzahl von Punktlichtern (11, 12) beinhaltet, wobei jedes Punktlicht (11, 12) dazu konfiguriert ist, um ein einfallendes Lichtfeld (101, 102) zu emittieren, welches den räumlichen Lichtmodulator SLM (3) beleuchtet;
wobei der SLM (3) dazu konfiguriert ist, um ein Referenz-SLM-Bildmuster (60) in einer SLM-Ebene (31) anzuzeigen, wobei das Referenz-SLM-Bildmuster (60) dazu konfiguriert ist, das einfallende Lichtfeld (101, 102) zu modulieren und ein moduliertes Lichtfeld (201, 202) gemäss dem SLM-Bildmuster (60) zu erzeugen; und
eine Projektionsoptik (4), welche dazu konfiguriert ist, um das modulierte Lichtfeld (201, 202) entlang einer Referenz-Optikachse (170) zu projizieren und ein virtuelles Bild (41-44) entlang der Referenz-Optikachse (170) zu projizieren;
**dadurch gekennzeichnet, dass**
der SLM (3) ferner für die Anzeige eines korrigierten SLM-Bildmusters (61) konfiguriert ist;
worin das korrigierte SLM-Bildmuster (61) dem Referenz-SLM-Bildmuster (60) entspricht, das in der SLM-Ebene (31) verschoben ist; und
worin das korrigierte SLM-Bildmuster (61) derart konfiguriert ist, dass die Projektionsoptik (4) das virtuelle Bild (41-44) entlang einer scheinbaren Projektionsachse (171-179) projiziert, die sich von der Referenz-Optikachse (170) unterscheidet, so dass das virtuelle Bild (41-44) mindestens eine optische Korrektur simuliert.

2. Lichtfeld-Projektor gemäss Anspruch 1, worin das korrigierte SLM-Bildmuster (61) dem Referenz-SLM-Bildmuster (60) entspricht, welches ferner eine geometrische Verzeichnung umfasst.

3. Lichtfeld-Projektor gemäss Anspruch 2, worin die geometrische Verzeichnung eine ungleichmässige vertikale Scherungsverzeichnung umfasst, um so eine negative oder positive Refraktionskorrektur oder eine zylindrische Korrektur zu simulieren.

4. Lichtfeld-Projektor gemäss einem der Ansprüche 1 bis 3, worin das korrigierte SLM-Bildmuster (61) so konfiguriert ist, dass die scheinbare Projektionsachse (171-179) auf einen virtuellen Brennpunkt (25) auf der Referenz-Optikachse (170) zwischen dem SLM (3) und der virtuellen Eyebox (6) konvergiert, so dass das virtuelle Bild (41-44) eine negative Refraktionskorrektur simuliert.

5. Lichtfeld-Projektor gemäss irgendeinem der Ansprüche 1 bis 3, worin das korrigierte SLM-Bildmuster (61) so konfiguriert ist, dass die scheinbare Projektionsachse (171-179) auf einen virtuellen Brennpunkt (25) auf der Referenz-Optikachse (170) weg von der virtuellen Eyebox (6) auf der gegenüberliegenden Seite des SLM (3) konvergiert, so dass das virtuelle Bild (41-44) eine positive Refraktionskorrektur simuliert.

6. Lichtfeld-Projektor gemäss Anspruch 1 oder 2, worin das korrigierte SLM-Bildmuster (61) dem Referenz-SLM-Bildmuster (60) entspricht, welches ferner eine geometrische Verzeichnung umfasst, die eine gleichmässige perspektivische Verzeichnung gemäss einer Ebene senkrecht zur SLM-Ebene (31) umfasst; und
worin das korrigierte SLM-Bildmuster (61) so konfiguriert ist, dass die scheinbaren Projektionsachsen (171-179) parallel zueinander und in Bezug auf die Referenz-Optikachse (170) geneigt verlaufen, so dass das virtuelle Bild (41-44) eine prismatische Refraktionskorrektur simuliert.

7. Lichtfeld-Projektor gemäss irgendeinem der Ansprüche 1 bis 3, worin das korrigierte SLM-Bildmuster (61) dazu konfiguriert ist, um die scheinbare Projektionsachse (171-179) um eine Achse (z) zu drehen, die im Wesentlichen orthogonal zur SLM-Ebene (31) verläuft.

8. Lichtfeld-Projektor gemäss irgendeinem der Ansprüche 1 bis 3, worin das korrigierte SLM-Bildmuster (61) dazu konfiguriert ist, um die scheinbare Projektionsachse (171-179) entlang zweier orthogonaler Rotationsachsen mit unterschiedlichen virtuellen Brennebenen (51, 52) zu drehen, so dass das virtuelle Bild (41-44) eine zylindrische Korrektur simuliert.

9. Lichtfeld-Projektor gemäss Anspruch 8, worin die zwei orthogonalen Rotationsachsen im Wesentlichen parallel verlaufen zu jeweils einer ersten Rotationsebene (53), die einem tangentialen Meridian entspricht, und einer zweiten Rotationsebene (54), die einem sagittalen Meridian entspricht, welche unterschiedliche Krümmungsradien in unterschiedlichen Ebenen aufweisen.

10. Lichtfeld-Projektor gemäss irgendeinem der Ansprüche 1 bis 9, worin jedes virtuelle Bild (41-44) eine Vielzahl von optischen Korrekturen umfasst.

11. Verfahren zur Erzeugung korrigierter virtueller Bilder unter Verwendung des Lichtfeld-Projektors (100) gemäss irgendeinem der Ansprüche 1 bis 10, wobei das Verfahren umfasst:
Berechnen mindestens eines virtuellen Bildes (41-44) unter Verwendung eines virtuellen Lochkameramodells, das eine virtuelle 3D-Szene abbildet, und Anzeigen eines Referenz-SLM-Bildmusters (60) gemäss dem berechneten virtuellen Bild;
Erzeugen mindestens eines optischen Korrekturparameters;
Modifizieren des Referenz-SLM-Bildmusters (60) als Funktion des besagten mindestens einen optischen Korrekturparameters, um ein korrigiertes SLM-Bildmuster (61) zu erhalten;
sequentielles Beleuchten des SLMs (3) durch die einfallenden Lichtfelder (101, 102), um mindestens ein moduliertes Lichtfeld (201, 202) zu erzeugen, das dazu konfiguriert ist, das besagte mindestens eine virtuelle Bild (41-44) zu bilden; und
sequentielles Projizieren des besagten mindestens einen modulierten Lichtfelds (201, 202), um das besagte mindestens eine virtuelle Bild (41-44) zu projizieren, welches die besagte mindestens eine optische Korrektur simuliert.

12. Verfahren gemäss Anspruch 11, worin das korrigierte SLM-Bildmuster (61) dem Referenz-SLM-Bildmuster (60) entspricht, welches ferner eine ungleichmässige vertikale Scherungsverzeichnung oder eine gleichmässige perspektivische Verzeichnung gemäss einer Ebene senkrecht zur SLM-Ebene (31) umfasst.

13. Verfahren gemäss Anspruch 11 oder 12, umfassend das Erzeugen einer Vielzahl von modulierten Lichtfeldern (201, 202), wobei jedes modulierte Lichtfeld (201, 202) ein virtuelles Bild (41-44) bildet;
worin die virtuellen Bilder (41-44) separat gebildet werden, wobei jedes virtuelle Bild (41-44) eine unterschiedliche optische Korrektur simuliert.

14. Verfahren gemäss Anspruch 13, ferner umfassend das sequentielle Stapeln der Vielzahl von virtuellen Bildern (41-44); Zusammenführen der virtuellen Bilder (41-44); und Projizieren der zusammengeführten virtuellen Bilder (41, 42).

15. Verfahren gemäss Anspruch 13, ferner umfassend das sequentielle Projizieren der virtuellen Bilder (41-44).

## Revendications

1. Projecteur de champ lumineux (100) pour générer des images virtuelles optiquement corrigées, comprenant :
un modulateur spatial de lumière, SLM (3) ;
une source lumineuse (1) incluant une pluralité de sources ponctuelles de lumière (11, 12), chaque source ponctuelle de lumière (11, 12) étant configurée pour émettre un champ lumineux incident (101, 102) illuminant le SLM (3) ;
le SLM (3) étant configuré pour afficher un motif d'image SLM de référence (60) dans un plan SLM (31), le motif d'image SLM de référence (60) étant configuré pour moduler le champ lumineux incident (101, 102) et générer un champ lumineux modulé (201, 202) conformément au motif d'image SLM de référence (60) ; et
une optique de projection (4) configurée pour projeter le champ lumineux modulé (201, 202) le long d'un axe optique de référence (170), et projeter une image virtuelle (41-44) le long de l'axe optique de référence (170) ;
**caractérisé en ce que**
le SLM (3) est en outre configuré pour afficher un motif d'image SLM corrigé (61) ;
le motif d'image SLM corrigé (61) correspondant au motif d'image SLM de référence (60) étant décalé dans le plan SLM (31) ; et
le motif d'image SLM corrigé (61) étant configuré tel que l'optique de projection (4) projette l'image virtuelle (41-44) le long d'un axe de projection apparent (171-179) qui diffère de l'axe optique de référence (170), de sorte que l'image virtuelle (41-44) simule au moins une correction optique.

2. Projecteur de champ lumineux selon la revendication 1,
dans lequel le motif d'image SLM corrigé (61) correspondant au motif d'image SLM de référence (60) incluant en outre une distorsion géométrique.

3. Projecteur de champ lumineux selon la revendication 2,
dans lequel la distorsion géométrique inclut une distorsion de cisaillement vertical non uniforme, destinée à simuler une correction réfractive négative ou positive, ou une correction cylindrique.

4. Projecteur de champ lumineux selon l'une des revendications 1 à 3,
dans lequel le motif d'image SLM corrigé (61) est configuré pour faire converger l'axe de projection apparent (171-179) sur un point focal virtuel (25) sur l'axe optique de référence (170), entre le SLM (3) et la zone oculaire virtuelle (6), de sorte que l'image virtuelle (41-44) simule une correction réfractive négative.

5. Projecteur de champ lumineux selon l'une des revendications 1 à 3,
dans lequel le motif d'image SLM corrigé (61) est configuré pour faire converger l'axe de projection apparent (171-179) sur un point focal virtuel (25) sur l'axe optique de référence (170) éloigné de la zone oculaire virtuelle (6) du côté opposé du SLM (3), de sorte que l'image virtuelle (41-44) simule une correction réfractive positive.

6. Projecteur de champ lumineux selon la revendication 1 ou 2,
dans lequel le motif d'image SLM corrigé (61) correspond au motif d'image SLM de référence (60) incluant en outre une distorsion géométrique comprenant une distorsion perspective uniforme selon un plan perpendiculaire au plan SLM (31) ; et
dans lequel le motif d'image SLM corrigé (61) est configuré pour rendre l'axe de projection apparent (171-179) parallèle entre eux et incliné par rapport à l'axe optique de référence (170), de sorte que l'image virtuelle (41-44) simule une correction de réfraction prismatique.

7. Projecteur de champ lumineux selon l'une des revendications 1 à 3,
dans lequel le motif d'image SLM corrigé (61) est configuré pour faire tourner l'axe de projection apparent (171-179) autour d'un axe (z) sensiblement orthogonal au plan SLM (31).

8. Projecteur de champ lumineux selon l'une des revendications 1 à 3,
dans lequel le motif d'image SLM corrigé (61) est configuré pour faire tourner l'axe de projection apparent (171-179) selon deux axes de rotation orthogonaux avec des plans focaux virtuels différents (51, 52), de sorte que l'image virtuelle (41-44) simule une correction cylindrique.

9. Projecteur de champ lumineux selon la revendication 8,
dans lequel les deux axes de rotation orthogonaux sont sensiblement parallèles à, respectivement, un premier plan de rotation (53) correspondant à un méridien tangentiel et un deuxième plan de rotation (54) correspondant à un méridien sagittal ayant des rayons de courbure différents dans différents plans.

10. Projecteur de champ lumineux selon l'une des revendications 1 à 9,
dans lequel chaque image virtuelle (41-44) comprend une pluralité de corrections optiques.

11. Procédé de génération d'images virtuelles corrigées utilisant le projecteur de champ lumineux (100) selon l'une des revendications 1 à 10, le procédé comprenant :
le calcul d'au moins une image virtuelle (41-44) utilisant un modèle de caméra sténopé virtuelle imageant une scène 3D virtuelle et affichant un motif d'image SLM de référence (60) conformément à l'image virtuelle calculée ;
la génération d'au moins un paramètre de correction optique ;
la modification du motif d'image SLM de référence (60) en fonction dudit au moins un paramètre de correction optique pour obtenir un motif d'image SLM corrigé (61) ;
l'illumination séquentielle du SLM (3) par les champs lumineux incidents (101, 102) de manière à générer au moins un champ lumineux modulé (201, 202) configuré pour former ladite au moins une image virtuelle (41-44) ; et
la projection séquentielle dudit au moins un champ lumineux modulé (201, 202) pour projeter ladite au moins une image virtuelle (41-44) simulant ladite au moins une correction optique.

12. Procédé selon la revendication 11,
dans lequel le motif d'image SLM corrigé (61) correspond au motif d'image SLM de référence (60) incluant en outre une distorsion de cisaillement vertical non uniforme ou une distorsion perspective uniforme selon un plan perpendiculaire au plan SLM (31).

13. Procédé selon la revendication 11 ou 12,
comprenant la génération d'une pluralité de champs lumineux modulés (201, 202), chaque champ lumineux modulé (201, 202) formant une image virtuelle (41-44) ;
dans lequel les images virtuelles (41-44) sont formées séparément, chaque image virtuelle (41-44) simulant une correction optique distincte.

14. Procédé selon la revendication 13,
comprenant en outre l'empilement séquentiel de la pluralité d'images virtuelles (41-44) ; la fusion des images virtuelles (41-44) ; et la projection des images virtuelles fusionnées (41, 42).

15. Procédé selon la revendication 13,
comprenant en outre la projection séquentielle des images virtuelles (41-44).
